# FASCICULE DE BREVET EUROPEEN

(11) **EP 3 839 589 B1**
(45) Date de publication et mention de la délivrance du brevet: **23.08.2023**
(21) Numéro de dépôt: 20211189.4
(22) Date de dépôt: 02.12.2020
(51) Int. Cl.: G02B 6/38, G02B 6/44

(54) **DISPOSITIF DE FIXATION DE FIBRES OPTIQUES POUR BOITIER OPTIQUE**
VORRICHTUNG ZUR BEFESTIGUNG VON OPTISCHEN FASERN FÜR EIN OPTISCHES GEHÄUSE
DEVICE FOR ATTACHING OPTICAL FIBRES FOR OPTICAL UNIT

(30) Priorité: 09.12.2019 FR 1913937
(43) Date de publication de la demande: 23.06.2021
(73) Titulaire: Omelcom, 01500 Chateau-Gaillard (FR)
(72) Inventeur: CLERC, Patrice, 01960 Peronnas (FR); PIN, Jean-Patrick, 01330 Villars les Dombes (FR)
(74) Mandataire: Germain Maureau

(56) Documents cités:
- EP-A1- 2 216 665
- US-B1- 6 410 850

## Description

### Domaine de l'invention

La présente invention concerne un dispositif de fixation de fibres optiques pour boitier optique.

### Art antérieur

Il est connu, pour le raccordement de deux extrémités de fibres optiques, d'utiliser soit une soudure soit un raccord optique. Dans ce dernier cas, chaque extrémité de fibre optique est équipée d'une languette terminale ou fiche mâle apte à coopérer avec une fiche femelle correspondante du raccord optique.

Le raccord optique a pour principe de maintenir les deux extrémités alignées de sorte à permettre une transmission d'informations optiques entre les deux fibres optiques.

Les fiches mâles sont agencées pour être solidarisées de manière amovible au raccord optique par un système d'encliquetage de sorte à permettre un montage et un démontage manuel.

En pratique, différents types de raccords optiques existent. Par exemple, des raccords simples sont utilisés pour raccorder deux extrémités de fibres optiques. Il existe également des raccords doubles permettant de raccorder deux à deux quatre fibres optiques.

Il peut également exister différentes géométries de fiches mâles compatibles avec différents raccords optiques.

Les raccords optiques sont notamment utilisés dans des boîtiers optiques pour le raccordement optique d'un bâtiment et/ou d'un appartement. Selon les boîtiers optiques, il peut être avantageux de permettre ou non le démontage des fiches mâles lorsque le boitier optique est fermé.

Dans certains cas, la fiche mâle doit être accessible depuis l'extérieur du boitier optique pour que le démontage soit réalisé par tout utilisateur sans avoir à ouvrir le boitier. Au contraire, dans d'autres cas, il est préférable que la fiche mâle soit totalement comprise dans le boitier optique de sorte à empêcher tout débranchement intempestif.

D1 décrit un boîtier optique avec un dispositif de fixation comprenant plusieurs raccords optiques et un support de fixation configuré pour être disposé dans le boîtier optique. Le support de fixation comprend une zone de montage pourvue d'un premier emplacement d'accueil, et d'un deuxième emplacement d'accueil étant décalé par rapport au premier emplacement d'accueil. Les raccords optiques sont tenus dans un cadre commun, et sont placés ensembles, soit tous dans le premier emplacement, ou soit tous dans le deuxième emplacement.

La multitude de configurations existantes rend difficile la standardisation de certaines pièces car des boitiers optiques et notamment des dispositifs de fixation internes aux boitiers optiques doivent avoir des géométries différentes.

La présente invention vise à résoudre tout ou partie des inconvénients mentionnés ci-dessus.

### Exposé de l'invention

A cet effet, la présente invention concerne un dispositif de fixation de fibres optiques pour boitier optique tel que définit dans la revendication 1. Les revendications dépendantes définissent des modes particuliers de réalisation de l'invention.

Cette disposition permet le positionnement du raccord optique selon deux configurations de montage décalées selon la direction d'entrée-sortie. En d'autres termes, le raccord optique est plus ou moins accessible depuis l'ouverture du boitier optique.

Le dispositif de fixation peut ainsi être utilisé pour différents types de boitiers optiques en fonction de l'accessibilité souhaitée du raccord optique. Lorsque le raccord optique est plus difficilement accessible, tout débranchement intempestif est empêché.

Selon un aspect de l'invention, en première configuration, la première fiche femelle est disposée de sorte à empêcher un montage et un démontage manuel d'au moins une fiche mâle selon la direction de coopération depuis l'extérieur du boitier optique.

Cette disposition permet la protection du raccordement optique car il est nécessaire d'ouvrir et/ou de démonter le boitier optique. Ainsi, seul un installateur spécialisé est apte à monter ou démonter la ou les fiches mâles de la première fiche femelle optique.

Selon un aspect de l'invention, en deuxième configuration, la première fiche femelle est disposée de sorte à autoriser un montage et un démontage manuel d'au moins une fiche mâle selon la direction de coopération depuis l'extérieur du boitier optique.

En d'autres termes, il n'est pas nécessaire d'ouvrir le boitier optique pour monter ou démonter au moins une fiche mâle lorsque le raccord optique est disposé sur le support de fixation selon la deuxième configuration.

Selon un aspect de l'invention, en deuxième configuration, au moins une partie de la première fiche femelle s'étend en dehors du boitier optique à travers l'ouverture.

Il apparait que la première fiche femelle est facilement accessible pour le montage et le démontage de l'au moins une fiche mâle de fibre optique.

Selon la revendication 1, la direction de coopération est confondue avec la direction d'entrée-sortie en première configuration et en deuxième configuration.

En d'autres termes, le raccord optique subit une translation selon la direction d'entrée-sortie entre la première configuration et la deuxième configuration.

Cette disposition facilite les raccordements internes au boitier optique car la deuxième fiche femelle présente toujours la même orientation par rapport à la direction d'entrée-sortie.

Aussi selon la revendication 1, le support de fixation s'étend selon un plan de base et la zone de montage présente des éléments de coopération s'étendant transversalement au plan de base, les éléments de coopération étant configurés pour maintenir de manière amovible le raccord optique en première configuration et en deuxième configuration.

Cette disposition permet une mise en place aisée du raccord optique sur le support de fixation puisque ce dernier est sensiblement plan et que les éléments de coopération définissent la position du raccord optique selon la première configuration et la deuxième configuration.

Selon un aspect de l'invention, les éléments de coopération comprennent chacun au moins un crochet d'encliquetage configuré pour maintenir en position de manière amovible le raccord optique.

Selon un aspect de l'invention, le raccord optique s'étend longitudinalement selon la direction de coopération, la première fiche femelle étant disposée à une première extrémité longitudinale et la deuxième fiche femelle étant disposée à une deuxième extrémité longitudinale opposée à la première extrémité longitudinale.

L'utilisation d'un raccord optique s'étendant longitudinalement facilite la disposition de fibres optiques internes au boitier optique puisque l'orientation de la ou des fibres optiques raccordées à la deuxième fiche femelle est la même selon les deux configurations.

Selon un aspect de l'invention, la deuxième fiche femelle est configurée pour recevoir au moins une fiche mâle de fibre optique insérée selon la direction de coopération.

Selon un aspect de l'invention, la zone de montage comprend un élément de guidage pour fibres optiques disposé en regard de la deuxième fiche femelle en première configuration et en deuxième configuration.

Cette disposition permet une intégration facile des fibres optiques à l'intérieur du boitier optique aussi bien en première configuration qu'en deuxième configuration.

Le dispositif de fixation peut ainsi remplacer deux dispositifs différents ne permettant d'installer le raccord optique que selon une configuration. Cette disposition permet ainsi une standardisation du dispositif de fixation quelle que soit son utilisation.

Selon un aspect de l'invention, l'élément de guidage est configuré pour guider au moins une fibre optique selon une courbe caractérisée par un rayon de courbure adapté aux fibres optiques.

Cette disposition permet une intégration facile des fibres optiques internes au boitier optique raccordées à la deuxième fiche femelle.

Selon un aspect de l'invention, la zone de montage comprend un opercule amovible, et en particulier sécable, adapté pour coopérer avec l'ouverture du boitier optique de sorte à fermer le boitier optique.

Selon un aspect de l'invention, le dispositif de fixation est agencé pour coopérer de manière amovible avec le boitier optique. De préférence, la coopération entre le dispositif de fixation et le boitier optique est réalisée par une charnière, le dispositif de fixation comprenant une première partie de la charnière et le boitier optique comprenant une deuxième partie de la charnière.

Selon la revendication 1, le support de fixation comprend deux zones de montage appelées première zone de montage et deuxième zone de montage.

Cette disposition permet de monter indépendamment deux raccords optiques sur le support de fixation, chaque raccord optique pouvant être en première configuration ou en deuxième configuration.

Selon un aspect de l'invention, le boitier optique présente une première ouverture définissant une première direction d'entrée-sortie et une deuxième ouverture définissant une deuxième direction d'entrée-sortie ou une ouverture commune définissant la première direction d'entrée sortie et la deuxième direction d'entrée-sortie.

De préférence, la première direction d'entrée-sortie est parallèle à la deuxième direction d'entrée-sortie.

En particulier, la première zone de montage comprend des premiers éléments de coopération et la deuxième zone de montage comprend des deuxièmes éléments de coopération, les premiers éléments de coopération et les deuxièmes éléments de coopération comprenant au moins un élément commun.

Selon un aspect de l'invention, le support de fixation comprend une pluralité zones de montage.

Selon un aspect de l'invention, chacun des éléments de coopération relatifs à une zone de montage comprend deux rails parallèles à la direction d'entrée-sortie correspondante. De préférence, les premiers éléments de coopération et les deuxièmes éléments de coopération comprennent un rail commun.

Selon un aspect de l'invention, le dispositif de fixation comprend en outre une fiche mâle pourvue d'une première partie d'un système d'encliquetage, chaque fiche femelle du dispositif de fixation comprenant au moins une deuxième partie du système d'encliquetage.

Selon un aspect de l'invention, la première fiche femelle et la deuxième fiche femelle sont chacune configurées pour coopérer avec une ou deux fiches mâles.

Cette disposition permet au support de fixation de coopérer indifféremment avec des raccords simples utilisés pour raccorder deux extrémités de fibres optiques ou des raccords doubles permettant de raccorder deux à deux quatre fibres optiques.

Selon un aspect de l'invention, la deuxième partie du système d'encliquetage comprend un clapet anti-poussière pourvu de moyen de rappel tel qu'un ressort.

Selon un aspect de l'invention, la première partie ou la deuxième partie du système d'encliquetage comprend un levier de désolidarisation configuré pour être sollicité manuellement en première configuration lorsque la fiche mâle coopère avec la première fiche femelle.

De préférence, le levier de désolidarisation est disposé à l'extérieur du boitier optique en deuxième configuration lorsque la fiche mâle coopère avec la première fiche femelle.

Selon un aspect de l'invention, le levier de désolidarisation est disposé à l'intérieur du boitier optique en première configuration lorsque la fiche mâle coopère avec la première fiche femelle.

De préférence, le levier de désolidarisation est compris dans la première partie du système d'encliquetage et la fiche mâle est configurée pour être orientée selon deux positions d'insertion par rapport à la direction de coopération, en particulier décalées d'un angle de 90°, suivant le nombre de fiches mâles aptes à être reçues par la première fiche femelle.

Cette disposition permet de standardiser l'encombrement extérieur du raccord si la première fiche de raccordement peut recevoir une ou deux fiches mâles. Il est ainsi possible de centrer l'unique deuxième partie en la tournant de 90°.

Selon un aspect de l'invention, le raccord optique présente une partie externe de coopération configurée pour coopérer avec la zone de montage correspondante, la partie externe de coopération étant symétrique par rapport à un plan central qui est transversal à la direction de coopération et/ou dans lequel la partie externe de coopération est symétrique par rapport à un plan longitudinal qui est transversal au plan central et dans lequel la direction de coopération est inscrite.

Cette disposition permet une mise en place simple du raccord optique sur la zone de montage correspondante puisque ce dernier peut être monté dans plusieurs sens.

La présente invention concerne également un boitier optique comprenant un dispositif de fixation tel que décrit ci-dessus.

Selon un aspect de l'invention, le boitier optique est un boitier de type point de branchement optique ou PBO configuré pour repartir au moins une fibre optique depuis des parties communes d'un immeuble jusque dans les logements. Ce boitier optique est discret grâce à sa compacité.

Le raccord optique double est utilisé généralement dans le cas d'un PBO pour permettre de prolonger la fibre vers deux logements.

La première configuration est utilisée généralement dans le cas d'un PBO pour limiter l'accès à la connectique par un particulier afin d'empêcher les déconnexions intempestives.

Selon un aspect de l'invention, le boitier optique est un boitier de type prise terminale optique ou PTO configuré pour raccorder une box dans le logement. Ceci permet de conserver au maximum l'esthétique du logement.

Le raccord optique simple est utilisé généralement dans le cas d'une PTO pour permettre le raccordement d'une box sur une fibre.

La deuxième configuration est utilisée généralement dans le cas d'une PTO pour permettre un accès facile à la connectique pour le raccordement de la box.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig. 1] est une vue en perspective d'un boitier optique comprenant un dispositif de fixation de fibres optiques.
[Fig. 2] est une vue de dessus du dispositif de fixation de fibres optiques selon une première configuration.
[Fig. 3] est une vue de dessus du dispositif de fixation de fibres optiques selon une deuxième configuration.
[Fig. 4] est une vue en perspective d'un support de fixation du dispositif de fixation de fibres optiques.
[Fig. 5] est une vue en perspective d'un raccord optique selon une première variante.
[Fig. 6] est une vue en perspective d'un raccord optique selon une deuxième variante.
[Fig. 7] est une vue en perspective d'un raccord optique selon une troisième variante.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

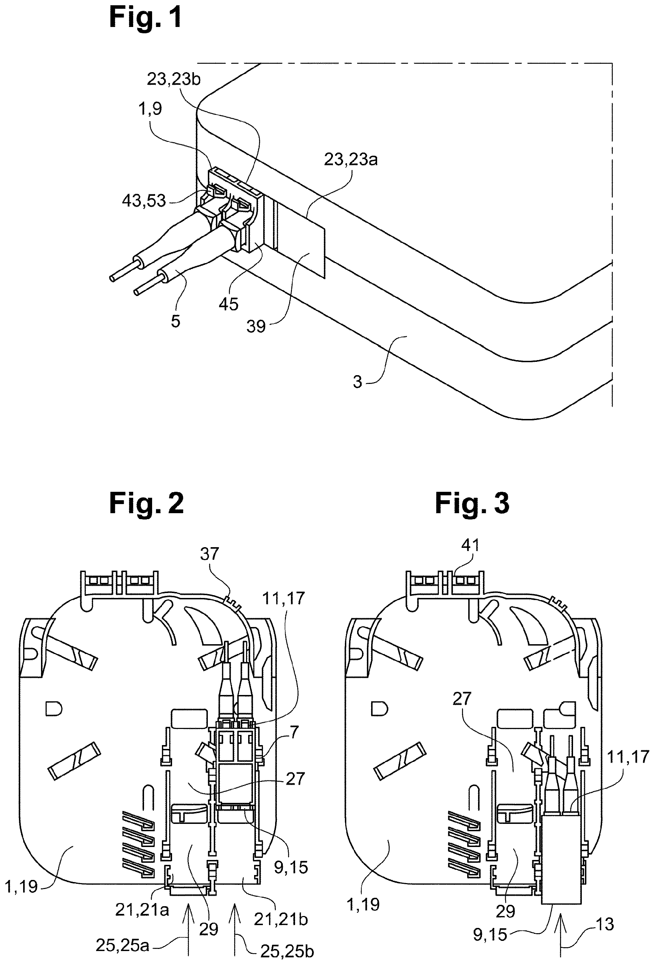

Comme illustré aux figures 1 à 3, un dispositif de fixation 1 de fibres optiques inclus dans un boitier optique 3 est configuré pour coopérer avec au moins une fibre optique équipée d'une fiche mâle 5.

Le dispositif de fixation 1 comprend un raccord optique 7 comprenant une première fiche femelle 9 et une deuxième fiche femelle 11. La première fiche femelle 9 est configurée pour recevoir au moins une fiche mâle 5 de fibre optique insérée selon une direction de coopération 13.

Le raccord optique 7 s'étend longitudinalement selon la direction de coopération 13, la première fiche femelle 9 étant disposée à une première extrémité longitudinale 15 et la deuxième fiche femelle 11 étant disposée à une deuxième extrémité longitudinale 17 opposée à la première extrémité longitudinale 15.

La deuxième fiche femelle 11 est configurée pour recevoir au moins une fiche mâle 5 de fibre optique insérée selon la direction de coopération 13, le sens d'insertion étant opposé par rapport à la première fiche femelle 9.

Le dispositif de fixation 1 comprend un support de fixation 19 configuré pour être disposé dans le boitier optique 3 en une position montée.

Le support de fixation 19 comprend deux zones de montage 21 appelées première zone de montage 21a et deuxième zone de montage 21b configurées pour recevoir indépendamment deux raccords optiques 7 sur le support de fixation 19, chaque raccord optique 7 pouvant être en première configuration ou en deuxième configuration comme expliqué ci-après.

Le boitier optique 3 présente une première ouverture 23a définissant une première direction d'entrée-sortie 25a et une deuxième ouverture 23b définissant une deuxième direction d'entrée-sortie 25b. Alternativement une ouverture 23 commune peut également définir la première direction d'entrée-sortie 25a et la deuxième direction d'entrée-sortie 25b. La première direction d'entrée-sortie 25a est parallèle à la deuxième direction d'entrée-sortie 25b.

Dans la partie qui suit la « zone de montage » fait référence aussi bien à la « première zone de montage » et qu'à la « deuxième zone de montage » étant donné que ces zones ont des caractéristiques identiques. Il en est de même pour la direction d'entrée-sortie 25.

La zone de montage 21 est pourvue d'un premier emplacement d'accueil 27 configuré pour recevoir le raccord optique 7 selon une première configuration dans laquelle la première fiche femelle 9 est en regard de l'ouverture 23 selon la direction d'entrée-sortie 25 et d'un deuxième emplacement d'accueil 29 configuré pour recevoir le raccord optique 7 selon une deuxième configuration.

Le deuxième emplacement d'accueil 29 est décalé par rapport au premier emplacement d'accueil 27 selon la direction d'entrée-sortie 25. En deuxième configuration, la première fiche femelle 9 est disposée de sorte à autoriser un montage et un démontage manuel d'au moins une fiche mâle 5 selon la direction de coopération 13 depuis l'extérieur du boitier optique 3.

En d'autres termes, il n'est pas nécessaire d'ouvrir le boitier optique 3 pour monter ou démonter au moins une fiche mâle 5 lorsque le raccord optique 7 est disposé sur le support de fixation 19 selon la deuxième configuration.

En première configuration, la première fiche femelle 9 est disposée de sorte à empêcher un montage et un démontage manuel d'au moins une fiche mâle 5 selon la direction de coopération 13 depuis l'extérieur du boitier optique 3.

En deuxième configuration, au moins une partie de la première fiche femelle 9 s'étend en dehors du boitier optique 3 à travers l'ouverture 23.

La direction de coopération 13 est confondue avec la direction d'entrée-sortie 25 en première configuration et en deuxième configuration. En d'autres termes, le raccord optique 7 subit une translation selon la direction d'entrée-sortie 25 entre la première configuration et la deuxième configuration.

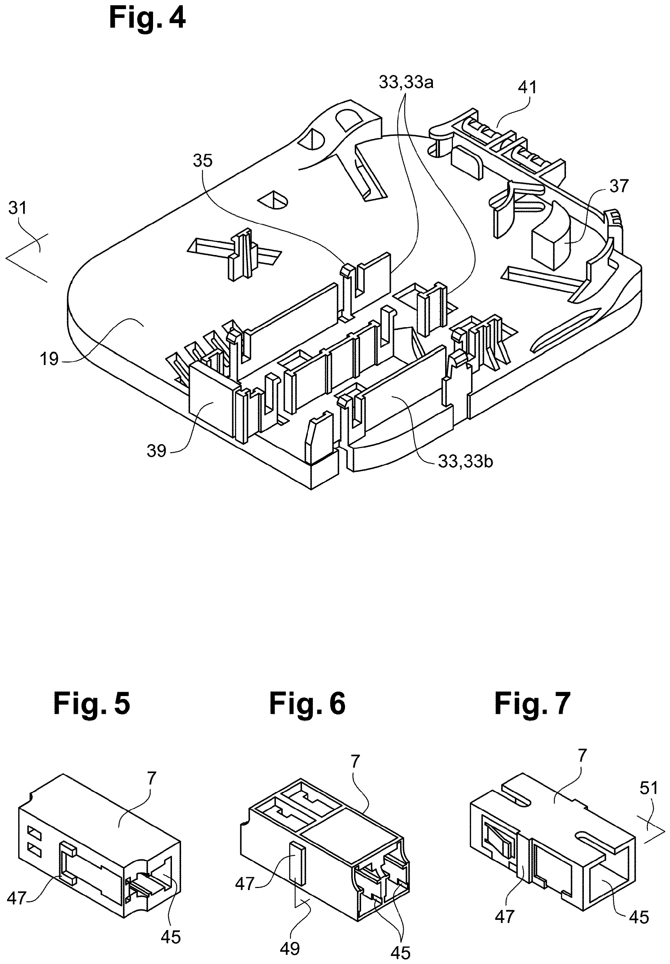

Comme illustré à la figure 4, le support de fixation 19 s'étend selon un plan de base 31 et la zone de montage 21 présente des éléments de coopération 33 s'étendant transversalement au plan de base 31. Les éléments de coopération 33 sont configurés pour maintenir de manière amovible le raccord optique 7 en première configuration et en deuxième configuration.

Les éléments de coopération 33 comprennent chacun au moins un crochet d'encliquetage 35 configuré pour maintenir en position de manière amovible le raccord optique 7.

La zone de montage 21 comprend en outre un élément de guidage 37 pour fibres optiques disposé en regard de la deuxième fiche femelle 11 en première configuration et en deuxième configuration.

L'élément de guidage 37 est configuré pour guider au moins une fibre optique selon une courbe caractérisée par un rayon de courbure adapté aux fibres optiques. La zone de montage 21 comprend un opercule amovible 39, et en particulier sécable, adapté pour coopérer avec l'ouverture 23 du boitier optique 3 de sorte à fermer le boitier optique 3.

La première zone de montage 21a comprend des premiers éléments de coopération 33a et la deuxième zone de montage 21b comprend des deuxièmes éléments de coopération 33b, les premiers éléments de coopération 33a et les deuxièmes éléments de coopération 33b comprenant au moins un élément commun.

Chacun des éléments de coopération 33a, 33b relatifs à une zone de montage 21a, 21b comprend deux rails parallèles à la direction d'entrée-sortie 25a, 25b correspondante. De préférence, les premiers éléments de coopération 33a et les deuxièmes éléments de coopération 33b comprennent un rail commun.

Le dispositif de fixation 1 est agencé pour coopérer de manière amovible avec le boitier optique 3. La coopération entre le dispositif de fixation 1 et le boitier optique 3 est réalisée par une charnière, le dispositif de fixation 1 comprenant une première partie de la charnière 41 et le boitier optique 3 comprenant une deuxième partie de la charnière.

Le dispositif de fixation 1 peut en outre comprendre une fiche mâle 5 pourvue d'une première partie d'un système d'encliquetage 43, chaque fiche femelle 9, 11 du dispositif de fixation 1 comprenant au moins une deuxième partie du système d'encliquetage 45.

La première fiche femelle 9 et la deuxième fiche femelle 11 sont chacune configurées pour coopérer avec une ou deux fiches mâles 5.

Le support de fixation 19 est configuré pour coopérer indifféremment avec des raccords simples utilisés pour raccorder deux extrémités de fibres optiques ou des raccords doubles permettant de raccorder deux à deux quatre fibres optiques.

La deuxième partie du système d'encliquetage 45 comprend un clapet anti-poussière pourvu de moyen de rappel tel qu'un ressort.

Comme illustré aux figures 5 à 7, le raccord optique 7 présente une partie externe de coopération 47 avec la zone de montage 21 correspondante, la partie externe de coopération 47 étant symétrique par rapport à un plan central 49 qui est transversal à la direction de coopération 13.

De préférence, la partie externe de coopération 47 est symétrique par rapport à un plan longitudinal 51 qui est transversal au plan central 49 et dans lequel la direction de coopération 13 est inscrite.

La première partie du système d'encliquetage 43 comprend un levier de désolidarisation 53 configuré pour être sollicité manuellement en première configuration lorsque la fiche mâle 5 coopère avec la première fiche femelle 9.

Le levier de désolidarisation 53 est disposé à l'extérieur du boitier optique 3 en deuxième configuration lorsque la fiche mâle 5 coopère avec la première fiche femelle 9.

Le levier de désolidarisation 53 est disposé à l'intérieur du boitier optique 3 en première configuration lorsque la fiche mâle 5 coopère avec la première fiche femelle.

La fiche mâle 5 est configurée pour être orientée selon deux positions d'insertion par rapport à la direction de coopération 13, en particulier décalées d'un angle de 90°, suivant le nombre de fiches mâles 5 aptes à être reçues par la première fiche femelle 9.

Le dispositif de fixation 1 décrit ci-dessus permet le positionnement du raccord optique 7 selon deux configurations de montage décalées selon la direction d'entrée-sortie 25. En d'autres termes, le raccord optique 7 est plus ou moins accessible depuis l'ouverture 23 du boitier optique 3.

Cette disposition permet la protection du raccordement optique car il est nécessaire d'ouvrir et/ou de démonter le boitier optique. Ainsi, seul un installateur spécialisé est apte à monter ou démonter la ou les fiches mâles de la première fiche femelle optique.

Le boitier optique 3 peut être un boitier de type point de branchement optique ou PBO configuré pour repartir au moins une fibre optique depuis des parties communes d'un immeuble jusque dans les logements. Ce boitier optique est discret grâce à sa compacité.

Le raccord optique double est utilisé généralement dans le cas d'un PBO pour permettre de prolonger la fibre vers deux logements. La première configuration est utilisée généralement dans le cas d'un PBO pour limiter l'accès à la connectique par un particulier afin d'empêcher les déconnexions intempestives.

Le même boitier optique 3 peut également être un boitier de type prise terminale optique ou PTO configuré pour raccorder une box dans le logement. Ceci permet de conserver au maximum l'esthétique du logement.

Le raccord optique simple est utilisé généralement dans le cas d'une PTO pour permettre le raccordement d'une box sur une fibre. La deuxième configuration est utilisée généralement dans le cas d'une PTO pour permettre un accès facile à la connectique pour le raccordement de la box.

Comme il va de soi, l'invention ne se limite pas à la seule forme d'exécution décrite ci-dessus à titre d'exemple, elle en embrasse au contraire toutes les variantes de réalisation.

## Revendications

1. Dispositif de fixation (1) de fibres optiques pour boitier optique (3), le dispositif de fixation (1) étant configuré pour coopérer avec au moins une fibre optique équipée d'une fiche mâle (5), le boitier optique (3) présentant une ouverture (23) définissant une direction d'entrée-sortie (25), le dispositif de fixation (1) comprenant :
- un raccord optique (7) comprenant une première fiche femelle (9) et une deuxième fiche femelle (11), la première fiche femelle (9) étant configurée pour recevoir au moins une fiche mâle (5) de fibre optique insérée selon une direction de coopération (13),
- un support de fixation (19) configuré pour être disposé dans le boitier optique (3) en une position montée, le support de fixation (19) comprenant deux zones de montage (21), chacune étant pourvue d'un premier emplacement d'accueil (27) configuré pour recevoir le raccord optique (7) selon une première configuration dans laquelle la première fiche femelle (9) est en regard de l'ouverture (23) selon la direction d'entrée-sortie (25) et d'un deuxième emplacement d'accueil (29) configuré pour recevoir le raccord optique (7) selon une deuxième configuration, le deuxième emplacement d'accueil (29) étant décalé par rapport au premier emplacement d'accueil (27) selon la direction d'entrée-sortie (25), la direction de coopération (13) étant confondue avec la direction d'entrée-sortie (25) en première configuration et en deuxième configuration,
le support de fixation (19) s'étendant selon un plan de base (31) et les zones de montage (21) présentant des éléments de coopération (33) s'étendant transversalement au plan de base (31), les éléments de coopération (33) étant configurés pour maintenir de manière amovible le raccord optique (7) en première configuration et en deuxième configuration,
les deux zones de montage (21) étant appelées première zone de montage (21a) et deuxième zone de montage (21b), la première zone de montage (21a) comprend des premiers éléments de coopération (33a) et la deuxième zone de montage (21b) comprend des deuxièmes éléments de coopération (33b), les premiers éléments de coopération (33a) et les deuxièmes éléments de coopération (33b) comprenant au moins un élément commun,
chacun des éléments de coopération (33) relatifs à une zone de montage (21) comprenant deux rails parallèles à la direction d'entrée-sortie (25) correspondante, les premiers éléments de coopération (33a) et les deuxièmes éléments (33b) de coopération comprenant un rail commun.

2. Dispositif de fixation (1) selon la revendication 1, dans lequel, en première configuration, la première fiche femelle (9) est disposée de sorte à empêcher un montage et un démontage manuel d'au moins une fiche mâle (5) selon la direction de coopération (13) depuis l'extérieur du boitier optique (3).

3. Dispositif de fixation (1) selon l'une des revendications 1 ou 2, dans lequel, en deuxième configuration, la première fiche femelle (9) est disposée de sorte à autoriser un montage et un démontage manuel d'au moins une fiche mâle (5) selon la direction de coopération (13) depuis l'extérieur du boitier optique (3).

4. Dispositif de fixation (1) selon l'une des revendications 1 à 3, dans lequel le raccord optique (7) s'étend longitudinalement selon la direction de coopération (13), la première fiche femelle (9) étant disposée à une première extrémité longitudinale (15) et la deuxième fiche femelle (11) étant disposée à une deuxième extrémité longitudinale (17) opposée à la première extrémité longitudinale (15).

5. Dispositif de fixation (1) selon l'une des revendications 1 à 4, dans lequel la zone de montage (21) comprend un élément de guidage (37) pour fibres optiques disposé en regard de la deuxième fiche femelle (11) en première configuration et en deuxième configuration.

6. Dispositif de fixation (1) selon l'une des revendications 1 à 5, comprenant en outre une fiche mâle (5) pourvue d'une première partie d'un système d'encliquetage (43), chaque fiche femelle (9, 11) du dispositif de fixation (1) comprenant au moins une deuxième partie du système d'encliquetage (45).

7. Dispositif de fixation (1) selon la revendication 6, dans lequel la première partie (43) ou la deuxième partie du système d'encliquetage (45) comprend un levier de désolidarisation (53) configuré pour être sollicité manuellement en première configuration lorsque la fiche mâle (5) coopère avec la première fiche femelle (9).

8. Dispositif de fixation (1) selon l'une des revendications 1 à 7, dans lequel le raccord optique (3) présente une partie externe de coopération (47) configurée pour coopérer avec la zone de montage (21) correspondante, la partie externe de coopération (47) étant symétrique par rapport à un plan central (49) qui est transversal à la direction de coopération (13) et/ou dans lequel la partie externe de coopération (47) est symétrique par rapport à un plan longitudinal (51) qui est transversal au plan central (49) et dans lequel la direction de coopération (13) est inscrite.

9. Boitier optique (3) comprenant un dispositif de fixation (1) selon l'une des revendications 1 à 8.

## Patentansprüche

1. Befestigungsvorrichtung (1) für optische Fasern für ein optisches Gehäuse (3), wobei die Befestigungsvorrichtung (1) dazu konfiguriert ist, mit mindestens einer optischen Faser zusammenzuwirken, die mit einem Stecker (5) ausgestattet ist, wobei das optische Gehäuse (3) eine Öffnung (23) aufweist, die eine Ein- und Austrittsrichtung (25) definiert, wobei die Befestigungsvorrichtung (1) Folgendes umfasst:
- einen optischen Anschluss (7), der eine erste Steckerbuchse (9) und eine zweite Steckerbuchse (11) umfasst, wobei die erste Steckerbuchse (9) dazu konfiguriert ist, mindestens einen Stecker (5) einer optischen Faser aufzunehmen, der in einer Zusammenwirkungsrichtung (13) eingeführt wird,
- ein Befestigungsträger (19), der dazu konfiguriert ist, in einer montierten Position in dem optischen Gehäuse (3) angeordnet zu werden, wobei der Befestigungsträger (19) zwei Montagebereiche (21) umfasst, die jeweils mit einer ersten Aufnahmestelle (27), die dazu konfiguriert ist, den optischen Anschluss (7) gemäß einer ersten Konfiguration aufzunehmen, bei der die erste Steckerbuchse (9) der Öffnung (23) in der Ein- und Austrittsrichtung (25) zugewandt ist, und einer zweiten Aufnahmestelle (29) versehen sind, die dazu konfiguriert ist, den optischen Anschluss (7) gemäß einer zweiten Konfiguration aufzunehmen, wobei die zweite Aufnahmestelle (29) bezüglich der ersten Aufnahmestelle (27) gemäß der Ein- und Austrittsrichtung (25) versetzt ist, wobei die Zusammenwirkungsrichtung (13) mit der Ein- und Austrittsrichtung (25) in der ersten Konfiguration und in der zweiten Konfiguration zusammenfällt,
wobei sich der Befestigungsträger (19) entlang einer Basisebene (31) erstreckt und die Montagebereiche (21) zusammenwirkenden Elemente (33) aufweisen, die sich quer zur Basisebene (31) erstrecken, wobei die zusammenwirkenden Elemente (33) dazu konfiguriert sind, den optischen Anschluss (7) in der ersten Konfiguration und in der zweiten Konfiguration lösbar zu halten,
wobei die beiden Montagebereiche (21) erster Montagebereich (21a) und zweiter Montagebereich (21b) genannt werden, wobei der erste Montagebereich (21a) erste zusammenwirkende Elemente (33a) umfasst und der zweite Montagebereich (21b) zweite zusammenwirkende Elemente (33b) umfasst, wobei die ersten zusammenwirkenden Elemente (33a) und die zweiten zusammenwirkenden Elemente (33b) mindestens ein gemeinsames Element umfassen,
wobei sich jedes der zusammenwirkenden Elemente (33) auf einen Montagebereich (21) bezieht, der zwei Schienen parallel zur entsprechenden Ein- und Austrittsrichtung (25) umfasst, wobei die ersten zusammenwirkenden Elemente (33a) und die zweiten zusammenwirkenden Elemente (33b) eine gemeinsame Schiene umfassen.

2. Befestigungsvorrichtung (1) nach Anspruch 1, wobei in der ersten Konfiguration die erste Steckerbuchse (9) so angeordnet ist, dass eine manuelle Montage und Demontage mindestens eines Steckers (5) in der Zusammenwirkungsrichtung (13) von außerhalb des optischen Gehäuses (3) verhindert wird.

3. Befestigungsvorrichtung (1) nach einem der Ansprüche 1 oder 2, wobei in der zweiten Konfiguration die erste Steckerbuchse (9) so angeordnet ist, dass eine manuelle Montage und Demontage mindestens eines Steckers (5) in der Zusammenwirkungsrichtung (13) von außerhalb des optischen Gehäuses (3) ermöglicht wird.

4. Befestigungsvorrichtung (1) nach einem der Ansprüche 1 bis 3, wobei sich der optische Anschluss (7) längs in der Zusammenwirkungsrichtung (13) erstreckt, wobei die erste Steckerbuchse (9) an einem ersten Längsende (15) angeordnet ist und die zweite Steckerbuchse (11) an einem zweiten Längsende (17) gegenüber dem ersten Längsende (15) angeordnet ist.

5. Befestigungsvorrichtung (1) nach einem der Ansprüche 1 bis 4, wobei der Montagebereich (21) ein Führungselement (37) für optische Fasern umfasst, das in der ersten Konfiguration und in der zweiten Konfiguration gegenüber der zweiten Steckerbuchse (11) angeordnet ist.

6. Befestigungsvorrichtung (1) nach einem der Ansprüche 1 bis 5, ferner umfassend einen Stecker (5), der mit einem ersten Teil eines Einrastsystems (43) versehen ist, wobei jede Steckerbuchse (9, 11) der Befestigungsvorrichtung (1) mindestens einen zweiten Teil des Einrastsystems (45) umfasst.

7. Befestigungsvorrichtung (1) nach Anspruch 6, wobei der erste Teil (43) oder der zweite Teil des Einrastsystems (45) einen Lösehebel (53) umfasst, der dazu konfiguriert ist, in der ersten Konfiguration manuell vorgespannt zu werden, wenn der Stecker (5) mit der ersten Steckerbuchse (9) zusammenwirkt.

8. Befestigungsvorrichtung (1) nach einem der Ansprüche 1 bis 7, wobei der optische Anschluss (3) einen äußeren zusammenwirkenden Teil (47) aufweist, der dazu konfiguriert ist, mit dem entsprechenden Montagebereich (21) zusammenzuwirken, wobei der äußere zusammenwirkende Teil (47) in Bezug auf eine Mittelebene (49) symmetrisch ist, die quer zur Zusammenwirkungsrichtung (13) verläuft, und/oder wobei der äußere zusammenwirkende Teil (47) in Bezug auf eine Längsebene (51) symmetrisch ist, die quer zur Mittelebene (49) verläuft und bei der die Zusammenwirkungsrichtung (13) festgeschrieben ist.

9. Optisches Gehäuse (3), umfassend eine Befestigungsvorrichtung (1) nach einem der Ansprüche 1 bis 8.

## Claims

1. A device for fastening (1) optical fibers for optical housing (3), the fastening device (1) being configured to cooperate with at least one optical fiber equipped with a male plug (5), the optical housing (3) having an opening (23) defining an input-output direction (25), the fastening device (1) comprising:
- an optical connector (7) comprising a first female plug (9) and a second female plug (11), the first female plug (9) being configured to receive at least one male plug (5) of optical fiber inserted in a cooperation direction (13),
- a fastening support (19) configured to be arranged in the optical housing (3) in a mounted position, the fastening support (19) comprising two mounting zones (21), each being provided with a first receiving location (27) configured to receive the optical connector (7) according to a first configuration in which the first female plug (9) faces the opening (23) in the input-output direction (25) and a second receiving location (29) configured to receive the optical connector (7) according to a second configuration, the second receiving location (29) being offset relative to the first receiving location (27) in the input-output direction (25), the cooperation direction (13) being coincident with the input-output direction (25) in the first configuration and in the second configuration,
the fastening support (19) extending along a base plane (31) and the mounting zones (21) having cooperation elements (33) extending transversely to the base plane (31), the cooperation elements (33) being configured to detachably hold the optical connector (7) in the first configuration and in the second configuration,
the two mounting zones (21) being called the first mounting zone (21a) and the second mounting zone (21b), the first mounting zone (21a) comprises first cooperation elements (33a) and the second mounting zone (21b) comprises second cooperation elements (33b), the first cooperation elements (33a) and the second cooperation elements (33b) comprising at least one common element,
each of the cooperation elements (33) relating to a mounting zone (21) comprising two rails parallel to the corresponding input-output direction (25), the first cooperation elements (33a) and the second cooperation elements (33b) comprising a common rail.

2. The fastening device (1) according to claim 1, wherein, in the first configuration, the first female plug (9) is arranged so as to prevent manual mounting and dismounting of at least one male plug (5) according to the cooperation direction (13) from the outside of the optical housing (3).

3. The fastening device (1) according to any of claims 1 or 2, wherein, in the second configuration, the first female plug (9) is arranged so as to authorize manual mounting and dismounting of at least one male plug (5) in the cooperation direction (13) from the outside of the optical housing (3).

4. The fastening device (1) according to any of claims 1 to 3, wherein the optical connector (7) extends longitudinally along the cooperation direction (13), the first female plug (9) being arranged at a first longitudinal end (15) and the second female plug (11) being arranged at a second longitudinal end (17) opposite the first longitudinal end (15).

5. The fastening device (1) according to any of claims 1 to 4, wherein the mounting zone (21) comprises a guide element (37) for optical fibers arranged facing the second female plug (11) in the first configuration and the second configuration.

6. The fastening device (1) according to any of claims 1 to 5, further comprising a male plug (5) provided with a first part of a snap-fitting system (43), each female plug (9, 11) of the fastening device (1) comprising at least one second part of the snap-fitting system (45).

7. The fastening device (1) according to claim 6, wherein the first part (43) or the second part of the snap-fitting system (45) comprises a release lever (53) configured to be manually biased in the first configuration when the male plug (5) cooperates with the first female plug (9).

8. The fastening device (1) according to any of claims 1 to 7, wherein the optical connector (3) has an outer cooperation part (47) configured to cooperate with the corresponding mounting zone (21), the outer cooperation part (47) being symmetrical with respect to a central plane (49) which is transverse to the cooperation direction (13) and/or wherein the outer cooperation part (47) is symmetrical with respect to a longitudinal plane (51) which is transverse to the central plane (49) and in which the cooperation direction (13) is registered.

9. An optical housing (3) comprising a fastening device (1) according to any of claims 1 to 8.
